# EUROPEAN PATENT SPECIFICATION

(11) **EP 2 490 121 B1**
(45) Date of publication and mention of the grant of the patent: **02.05.2018**
(21) Application number: 12155267.3
(22) Date of filing: 14.02.2012
(51) Int. Cl.: G06F 3/12, G03G 15/00, H04N 1/00, H04N 1/32, H04N 1/44

(54) **Image forming apparatus, method, software program, and carrier medium**
Bilderzeugungsvorrichtung, Verfahren, Softwareprogramm und Trägermedium
Appareil de formation d'images, procédé, programme logiciel et support de transport

(30) Priority: 15.02.2011 JP 2011029641
(43) Date of publication of application: 22.08.2012
(73) Proprietor: Ricoh Company, Ltd., Tokyo 143-8555 (JP)
(72) Inventor: Takeshi, Yoshizumi, Tokyo 143-8555 (JP)
(74) Representative: Schwabe - Sandmair - Marx

(56) References cited:
- EP-A2- 1 698 967
- US-A1- 2007 097 424
- US-A1- 2010 195 141

## Description

### BACKGROUND

### Technical Field

The present invention relates to an image forming apparatus, an image forming control method, a software program for execution of an image forming control method, and a carrier medium or storage medium, and more particularly to an image forming apparatus, an image forming control method, a software program for execution of an image forming control method, and a carrier medium or storage medium storing the software program to enhance energy efficiency of an electro-photographic engine.

### Description of the Background Art

Image forming apparatuses such as copiers, facsimile machines, printers, and multi-functional apparatuses include units that consume large amounts of power when forming images. Further, such image forming apparatuses may be left on standby for extended periods of time while still being supplied with power.

In an effort to reduce power consumption of such image forming apparatuses, conventional apparatuses utilize multiple power modes. For example, when warm-up continues for a given time period, the power mode shifts to a reduced-power mode or power save mode to reduce the power supply amount, which may be called a power-saving function. During the reduced-power mode, the power supply amount to a printer engine, which consumes large amounts of power, can be reduced. Specifically, during the reduced-power mode of image forming apparatus using electrophotography, the temperature of a fixing heater can be adjusted to a wait-period temperature lower than the fixing temperature; backlighting of a liquid crystal display (LCD) of an control panel can be turned OFF; and the power supply to a main central processing unit (CPU), which consumes large amounts of power, can be stopped.

The image forming apparatus can be shifted to such reduced-power mode by operating the reduced-power mode key on the control panel, or by using a power-save timer that shifts the apparatus automatically to the reduced power mode at a certain set time unless a print job request is received or a key on the control panel is operated.

When a job request is received while the image forming apparatus is in the reduced-power, the power supply to the units is resumed and increased, so that the image forming apparatus is returned from the reduced-power mode to the warm-up mode, the concerned units warmed up, and an image forming process can be conducted.

Conventionally, as disclosed for example in JP-2009-292139-A, a printer engine activates a printing unit to conduct a printing process in response to a print request from a controller. If the printer engine does not receive a print request for a given time period after the printer engine received the most recent print request, a page-presence check unit requests the controller to check whether a next page still presents in print data. If the controller reports that the next page still presents in print data, deactivation of the printing unit by a print-deactivation unit is cancelled, and the printer engine waits to receive the next print request.

However, in such conventional art, the printing process can be stopped only when the printer engine requests the controller to check whether the next page still presents and then confirms that the next page does not present. As such, the printer engine needs to request the controller to check the print page information. Because the printing process can be stopped only when a response of non-presence of next page is received by the printer engine, power is consumed wastefully while awaiting such response, the printer engine deteriorates, and consumables are wasted.

### SUMMARY

In one aspect of the present invention, an image forming apparatus is devised. The image forming apparatus includes an image processing unit to prepare page-by-page image drawing data by converting image data input to the image forming apparatus; a data storage unit to store the image drawing data prepared by the image processing unit; a page-number obtaining unit to obtain the total number of pages of the image drawing data stored in the data storage unit; an image forming unit to output an image on a recording medium based on the image drawing data; and a data management unit to output the total number of pages and the image drawing data stored in the data storage unit to the image forming unit.

In another aspect of the present invention, a method of controlling image formation by an image forming apparatus is devised. The method includes the steps of: converting image data, input to the image forming apparatus, to image drawing data page by page; storing the image drawing data to a data storage unit; obtaining the total number of pages of the image drawing data stored in the data storage unit; transmitting the total number of pages and the image drawing data stored in the data storage unit to an image forming device for output; outputting an image on a recording medium based the image drawing data using the image forming device; managing the number of image forming pages at the image outputting step based on the total number of pages; and shifting the image forming apparatus to a reduced-power mode upon completing output of an image of the last page of the image drawing data at the outputting step to reduce power supply to one or more devices used in the outputting step.

In another aspect of the present invention, a non-transitory computer readable carrier medium storing a program for executing a method of controlling image formation by an image forming apparatus, which when executed causes a computer to perform the method of controlling image formation is devised. The method includes the steps of: converting image data, input to the image forming apparatus, to image drawing data page by page; storing the image drawing data to a data storage unit; obtaining the total number of pages of the image drawing data stored in the data storage unit; transmitting the total number of pages and the image drawing data stored in the data storage unit to an image forming device for output; outputting an image on a recording medium based the image drawing data using the image forming device; managing the number of image forming pages at the image outputting step based on the total number of pages; and shifting the image forming apparatus to a reduced-power mode upon completing output of an image of the last page of the image drawing data at the outputting step to reduce power supply to one or more devices used in the outputting step.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a block diagram of an image forming apparatus according to an example embodiment;
FIG. 2 is a functional block diagram of a controller and a printer engine;
FIG. 3 is a timing chart of a printing process;
FIG. 4 shows a flowchart of steps of a printing control process by a controller, in which the controller conducts accumulation or storing of print data; and
FIG. 5 shows a flowchart of steps of a printing control process by a controller from a print request to an image outputting request.

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

### DETAILED DESCRIPTION OF EXEMPLARY EMBODIMENTS

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views shown in the drawings, specific terminology is employed for the sake of clarity, the present disclosure is not limited to the specific terminology so selected and it is to be understood that each specific element includes all technical equivalents that operate in a similar manner and achieve a similar result. Referring now to the drawings, an apparatus or system, according to an example embodiment is described hereinafter.

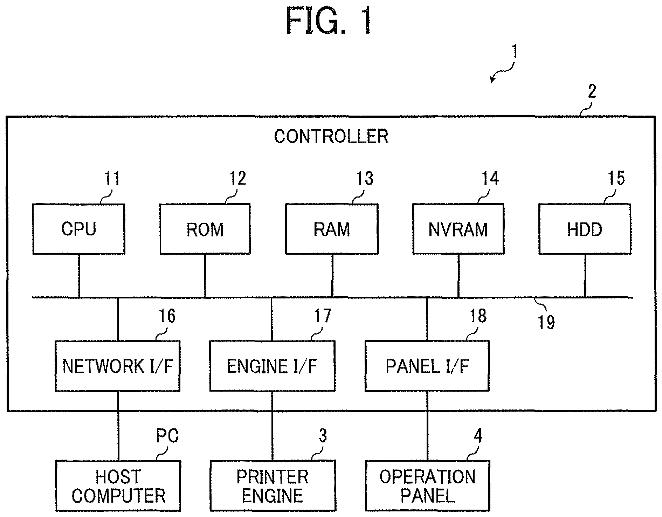

FIGs. 1 to 5 show an image forming apparatus, an image forming control method, a software program of image forming control method, and a carrier medium or storage medium according to an example embodiment. The carrier medium may be also referred to the storage medium. FIG. 1 is a block diagram of an image forming apparatus 1, which employs an image forming apparatus, an image forming control method, a software program of image forming control method and a carrier medium according to an example embodiment.

As shown in FIG. 1, the image forming apparatus 1 includes, for example, a controller 2, a printer engine 3, and an operation panel 4 or control panel 4. The controller 2, which may be a processor, includes a central processing unit (CPU) 11, a read only memory (ROM) 12, a random access memory (RAM) 13, a non-volatile random access memory (NVRAM) 14, a hard disk drive (HDD) 15, a network interface (I/F) 16, an engine interface (I/F) 17, and a panel interface (I/F) 18, wherein such units can be connected with each other using a bus 19.

The network I/F 16 can be connected to a host computer Pc via a network such as a local area network (LAN) or the like. The network I/F 16 receives control signals and data (e.g., print data) from the host computer Pc, and transmits status signals or the like from the image forming apparatus 1 to the host computer Pc. As such, the network I/F 16 can be used as an interface.

The ROM 12 stores various types of software programs used for data processing/management and for controlling peripheral modules, and various types of data to execute each one of software programs. Specifically, the ROM 12 stores one or more software programs for the basic processing in the image forming apparatus 1, and one or more software programs to execute an image forming control method such as reporting the total number of print pages to the printer engine 3. The information of total number of print pages can be used to promptly shift an apparatus to the reduced-power condition upon printing the total number of print pages, which will be described later.

The CPU 11, which can be function as an image processing unit, a page-number obtaining unit, and a data management unit, executes software programs stored in the ROM 12 using the RAM 13 as a working memory. Specifically, the CPU 11 controls each unit in the image forming apparatus 1 to conduct a printing process, and controls an image forming process, which will be described later.

The RAM 13 can be used as a working memory of the CPU 11, and as a buffer to temporarily store print data one by one such as page-by-page, which may be called page-by-page print data, converted from print data transmitted from the host computer Pc, and can be used as a bitmap memory to store image drawing data (i.e., actual print data) converted from data stored in the buffer. The RAM 13 has a capacity to store the print data, the image drawing data converted from the print data, or intermediary data for a plurality of pages.

The NVRAM 14 is a memory that can store data even when the power supply to the image forming apparatus 1 is shut-off. The NVRAM 14 stores data that needs to be retained even if the power supply to the image forming apparatus 1 is shut-off. For example, various setting information such as system setting values, count values of printed sheets, print setting values, and various types of data and setting information used for controlling an image forming process based on a reporting of number of printed pages, to be described later, are stored under the control of the CPU 11.

The hard disk drive 15, function-able as a data storage or data storage unit, can store print data loaded for the image forming apparatus 1, data (e.g., print data) transmitted from the host computer Pc under the control of the CPU 11. Such data can be read at a given timing as required. The hard disk drive 15 stores print data transmitted from the host computer Pc. Such data can be used for a secret printing and a time-shift printing that waits some time for printing data when a print request is input by a user using the user identification (ID).

The engine I/F 17 can be connected to the printer engine 3. The engine I/F 17 is used to transmit control signals and image drawing data from the controller 2 to the printer engine 3, and to transmit status signals from the printer engine 3 to the controller 2. For example, the engine I/F 17 is used to transmit the total number of print pages of one print job from the CPU 11 to the printer engine 3.

The printer engine 3, used as an image forming unit, for example, can be used as a printer engine for electrophotography. At first, print data is transmitted from the host computer Pc to the network I/F 16, and is converted to image drawing data, and then the image drawing data is received by the printer engine 3 via the engine I/F 17. The printer engine 3 prints an image on a sheet, fed from a sheet feeder (i.e., outputting process of image), and ejects the printed sheet to an ejection tray through a sheet ejection port.

When the printer engine 3 is used as an electro-photographic engine, the printer engine 3 includes a photoconductor, an optical writing unit, a developing unit, a charging unit, and a cleaning unit, which may be required to conduct a printing process on a sheet based on image drawing data using electrophotography. In such configuration, a latent image can be formed on the photoconductor using the optical writing unit based on image drawing data and control signals, and then a toner image can be formed on the photoconductor by supplying toner onto the latent image using the developing unit. Under the control of the printer engine 3, a sheet is fed between the photoconductor and a transfer unit from a sheet feeder, and then the toner image is transferred from the photoconductor to the sheet. The sheet having the transferred toner image is then transported to a fixing unit to fix the toner image on the sheet by applying pressure and heat, by which a printing process completes. Further, the printer engine 3 may include a polygon motor controller to control a polygon motor that rotates a polygon mirror of the optical writing unit, and a fixing temperature controller to control a temperature of the fixing unit.

The printer engine 3 may further include a memory to store information of the total number of print pages of a print job transmitted from the engine I/F 17, a counter to count the number of printed pages, and a power-saving controller or power saving unit to control a power-saving operation such as power supply/stop for units that consume power such as the fixing heater of the printer engine 3. Upon completing a printing of the total number of print pages, the power-saving controller sets the reduced-power condition for one or more units that consume large amounts of power by stopping or reducing the power supply to each unit. For example, the power-saving controller stops the driving of the polygon motor, and sets the temperature of the fixing unit lower than the warm-up temperature to reduce the power consumption.

Further, upon receiving the print request from the engine I/F 17 during the reduced-power condition, the power-saving controller of the printer engine 3 resumes the power supply to the one or more units, which have been stopped or reduced the power supply, to return the image forming apparatus 1 to the warm-up condition so that a printing operation can be started.

The panel I/F 18 can be connected to the operation panel 4. The panel I/F 18 can be used to transmit signals or data between the controller 2 and the operation panel 4.

The operation panel 4 or control panel 4 may include operation keys such as ten keys, a start key, mode keys to select modes, and a display such as a touch panel display using a liquid crystal display (LCD). By operating the operation keys and touching the display, various instructions such as print instruction can be input, and the display displays instructions input from the operation keys and other information of the image forming apparatus 1 to report information and status to a user.

The host computer Pc may be a personal computer having hardware and a hardware/software-combined configuration. The host computer Pc transmits, for example, print data prepared by using page description language (PDL), and control command such as print control data prepared by using printer job language (PJL), to the image forming apparatus 1.

The host computer Pc may use a printer driver to generate or prepare print data composed af PJL data and PDL data, and transmits the print data to the image forming apparatus 1 via a network.

As for the image forming apparatus 1, a software program to implement an image forming control can be loaded to the ROM 12, with which the total number of print pages can be reported to the printer engine 3, and the printer engine 3 can promptly shift to the reduced-power condition, which will be described later.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a Wireless Application Protocol (WAP) or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a transmission control protocol/internet protocol (TCP/IP) signal carrying computer code over an IP network, such as the Internet. The carrier medium can also comprise a storage medium for storing processor readable code such as a flexible disk, a compact disk read only memory (CD-ROM), a digital versatile disk read only memory (DVD-ROM), DVD recording only/rewritable (DVD-R/RW), electrically erasable and programmable read only memory (EEPROM), erasable programmable read only memory (EPROM), a memory card or stick such as a USB memory, a memory chip, a mini disk (MD), a magneto optical disc (MO), a magnetic tape, a hard disk in a server, a solid state memory device or the like, but not limited these.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

In the above-described example embodiment, a computer can be used with a computer-readable program, described by object-oriented programming languages such as C++, Java (registered trademark), JavaScript (registered trademark), Perl, Ruby, or legacy programming languages such as machine language, assembler language to control functional units used for the apparatus or system. For example, a particular computer (e.g., personal computer, work station) may control an information processing apparatus or an image processing apparatus such as image forming apparatus using a computer-readable program, which can execute the above-described processes or steps. In the above described embodiments, at least one or more of the units of apparatus can be implemented in hardware or as a combination of hardware/software combination. In example embodiments, processing units, computing units, or controllers can be configured with using various types of processors, circuits, or the like such as a programmed processor, a circuit, an application specific integrated circuit (ASIC), used singly or in combination.

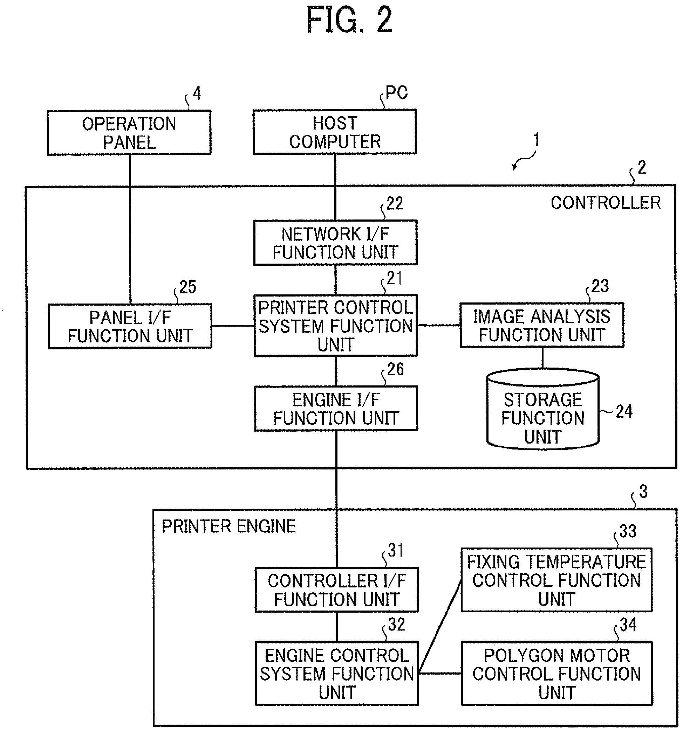

When a software program for implementing an image forming process is loaded and executed in the image forming apparatus 1, the controller 2 and the printer engine 3 can be configured with functional units shown in FIG. 2. Each of the controller 2 and the printer engine 3 may be a processor. For example, the controller 2 can be configured with a printer control system function unit 21, a network interface (I/F) function unit 22, an image analysis function unit 23, a storage function unit 24, a panel interface (I/F) function unit 25, and an engine interface (I/F) function unit 26. The image analysis function unit 23 may be also referred to as the PDL/PJL function unit 23. The printer engine 3 can be configured with a controller interface (I/F) function unit 31, an engine control system function unit 32, a fixing temperature control function unit 33 (fixing temperature controller), and a polygon motor control function unit 34 (polygon motor controller).

The network I/F function unit 22 receives control signals and data (e.g., print data) from the host computer Pc, and then transmits the signals and data to the printer control system function unit 21. Further, the network I/F function unit 22 receives status signals from the printer control system function unit 21 and then transmits the signals to the host computer Pc.

The storage function unit 24, function-able as a data storage unit, may be configured with the RAM 13 or the hard disk drive 15, which stores print data transmitted from the host computer Pc, image data being in processing or processed by the image analysis function unit 23, and image drawing data generated or prepared by the image analysis function unit 23.

The image analysis function unit 23, used as an image processing unit, receives print data, and generates or prepares image drawing data, and stores the image drawing data to the storage function unit 24. Upon receiving a request from the printer control system function unit 21, data is read from the storage function unit 24 and transferred to the printer control system function unit 21.

Specifically, the image analysis function unit 23 interprets PJL command and PDL command in the print data transmitted from the host computer Pc to generate or prepare image drawing data, and transfers the image drawing data to the printer control system function unit 21. At this timing, the image analysis function unit 23 can obtain information of the total number of pages of the generated or prepared image drawing data, and transfers the information of the total number of pages to the printer control system function unit 21.

Under the control of the printer control system function unit 21, the panel I/F function unit 25 controls the operation panel 4.

Under the control of the printer control system function unit 21, the engine I/F function unit 26 issues a print instruction or other instructions to the printer engine 3.

The printer control system function unit 21 controls each unit in the image forming apparatus 1, and operations of the printer engine 3. For example, the printer control system function unit 21 reports the total number of pages of image drawing data, obtained by the image analysis function unit 23, to the printer engine 3 via the engine I/F function unit 26.

The controller I/F function unit 31 of the printer engine 3 receives image drawing data and print instructions from the engine I/F function unit 26 of the controller 2, and outputs print status information or the like, received from the engine control system function unit 32, to the engine I/F function unit 26.

The engine control system function unit 32, used as a power saving unit, controls each unit of the printer engine 3 to implement a printing process based on the image drawing data and print information that the controller I/F function unit 31 receives from the controller 2. Specifically, the engine control system function unit 32 controls main units of the printer engine 3 such as the fixing temperature control function unit 33 for controlling a fixing temperature, controls a shift timing to shift to the reduced-power condition by stopping or reducing power supply to the polygon motor using the polygon motor control function unit 34, and controls a shift timing to shift from the reduced-power condition to the normal-power condition (e.g., return to power supply mode) upon receiving the print request from the controller 2.

Under the control of the engine control system function unit 32, the fixing temperature control function unit 33 can control the temperature of the fixing unit at multiple levels such as the fixing temperature used for fixing process, the warm-up temperature at which is one or more units can be warmed up, and the wait-period temperature during the reduced-power condition lower than the warm-up temperature. For example, the temperature of the fixing unit can be changed in two stages such as between the fixing temperature and wait-period temperature, or the temperature of the fixing unit can be changed in three stages such as the fixing temperature, warm-up temperature, and wait-period temperature, wherein the warm-up temperature is set lower than the fixing temperature and set higher than the wait-period temperature.

Under the control of the engine control system function unit 32, the polygon motor control function unit 34 controls a drive rotation of the polygon motor.

A description is given of a process of controlling an image forming operation according to an example embodiment. When the image forming apparatus 1 conducts a print job, the total number of pages of the print job can be reported to the printer engine 3, and when the printing of the last page of the total number of pages by the printer engine 3 completes, the image forming apparatus 1 can be promptly shifted to the reduced-power condition.

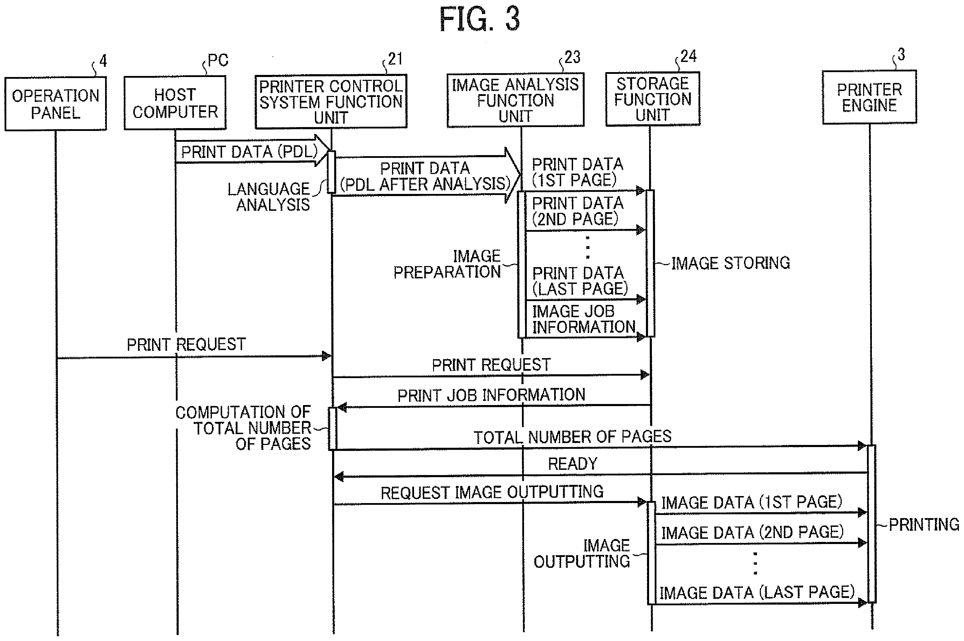

As shown in FIG. 3, when the host computer Pc transmits print data and print information such as PDL and PJL while designating a secret printing and/or an accumulation printing to the image forming apparatus 1 via a network, the network I/F function unit 22 receives such data, and transfers such data to the printer control system function unit 21. The printer control system function unit 21 conducts an analysis process for PDL data received from the host computer Pc, and transfers an analysis result of PDL data to the image analysis function unit 23.

Upon receiving the print data, the image analysis function unit 23 prepares image drawing data (e.g., bitmap data) as page-by-page print data, and transmits such image drawing data to the storage function unit 24. Upon completing the preparation of the last page of print data, the image analysis function unit 23 reports image job information or print job information to the storage function unit 24. The image job information or print job information may include a file name, a user code, processed date/time, an image size, and the total number of print pages, or the like.

While storing the processed image data in the storage function unit 24, the image forming apparatus 1 waits a print instruction from the operation panel 4.

When a user inputs the user identification (ID) such as user code and a file name using the operation panel 4, and then presses a print button, the operation panel 4 outputs information of the user code and file name as a print request to the printer control system function unit 21. Upon receiving the print request from the operation panel 4, the printer control system function unit 21 outputs the print request by designating the file name to the storage function unit 24.

Upon receiving the print request from the printer control system function unit 21, the storage function unit 24 transmits the print job information corresponding to the print job designated by the received file name to the printer control system function unit 21.

Upon receiving the print job information, the printer control system function unit 21 obtains information of the total number of print pages of the print job in the received print job information, and transmits the information of the total number of print pages of the print job to the printer engine 3 via the engine I/F function unit 26.

Upon receiving the information of the total number of print pages of the print job, the engine control system function unit 32 of the printer engine 3 starts a printing operation. When the printing operation starts, the engine control system function unit 32 transmits a "ready" signal to the printer control system function unit 21, wherein the ready signal indicates that a preparation of printing operation has been set.

Upon receiving the ready signal from the printer engine 3, the printer control system function unit 21 instructs the storage function unit 24 to output image drawing data of the print job, reads out the image drawing data of the print job from the storage function unit 24 for each page one-by-one from the first page (or front page) to the last page of the image drawing data, and outputs the read-out data to the printer engine 3 via the engine I/F function unit 26. The printer engine 3 prints an image on a sheet using the transmitted image drawing data and the print information.

Upon completing a printing operation of the total number of print pages, reported in advance, the engine control system function unit 32 of the printer engine 3 controls the fixing temperature control function unit 33 and the polygon motor control function unit 34 to the reduced-power condition or mode (i.e., mode shifting).

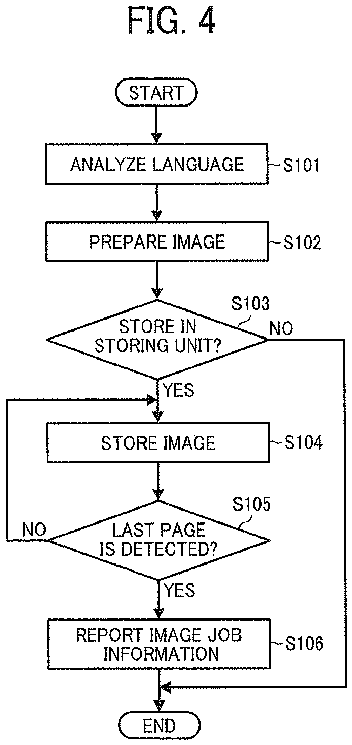

A description is given of a printing control process, which is from the reception of print data by the controller 2 and until the accumulation or storing of print data with reference to FIG. 4. Upon receiving the print data from the host computer Pc, in the controller 2, the printer control system function unit 21 conducts a language analysis process such as analyzing PDL for the entire print data, and transfers the analyzed print data to the image analysis function unit 23 (step S101).

The image analysis function unit 23 prepares image drawing data page-by-page from the received print data (step S102), and determines whether the image drawing data is to be stored in the storage function unit 24 (step S103).

If it is determined that the image drawing data is not stored in the storage function unit 24 (step S103: No), which means a direct printing is to be conducted, the printer control system function unit 21 does not store data in the storage function unit 24, but transfers the image drawing data to the printer engine 3, and an image is printed on a sheet using the printer engine 3. As such, when the direct printing is conducted, the image drawing data is not stored in the storage function unit 24.

In contrast, if it is determined that the image drawing data is to be stored in the storage function unit 24 (step S103: Yes), the image analysis function unit 23 conducts an image data accumulation process, in which the prepared image drawing data is stored or accumulated to the storage function unit 24 (step S104), and checks whether the data of the last page is detected (step S105).

If the data of the last page is not yet detected (step S105: No), the process returns to step S104, and the image analysis function unit 23 repeats the accumulation or storing of image drawing data to the storage function unit 24 until the data of the last page is detected (steps S104 and S105).

If the accumulation or storing of the last page is detected (step S105: Yes), the image analysis function unit 23 reports the image job information or print job information to the storage function unit 24 and stores or accumulates the image job information or print job information in the storage function unit 24 (step S106). The image job information or print job information may include a file name, a user code, processed date/time, an image size, and the total number of print pages, but not limited thereto.

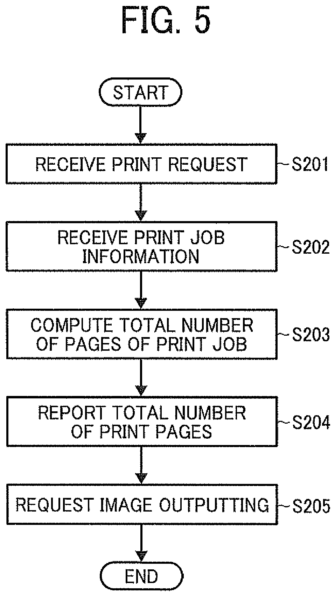

After storing or accumulating the print data in the storage function unit 24, the controller 2 conducts a process shown in FIG. 5. Upon receiving the print request from the operation panel 4, the printer control system function unit 21 of the controller 2 requests the print job information or image job information to the storage function unit 24 (step S201).

Upon receiving the print job information from the storage function unit 24 (step S202), the printer control system function unit 21 computes the total number of pages of the print job based on the received print job information (step S203), wherein the print job can be requested by a user.

Upon computing the total number of print pages, the printer control system function unit 21 reports the computed total number of print pages to the printer engine 3 via the engine I/F function unit 26 (step S204). When the printer engine 3 is set ready for printing, the printer control system function unit 21 requests a data output from the storage function unit 24 (step S205), in which the outputting of image drawing data to the printer engine 3 is requested.

In the above described example embodiment, print data transmitted from the host computer Pc is stored in the storage function unit 24 as image drawing data, and such image drawing data is output as a print image. Further, the to-be-printed data can be transmitted from other than the host computer Pc. For example, if the image forming apparatus 1 includes a scanner, scanned image data can be stored in the storage function unit 24 as image drawing data, and such image drawing data can be output as a printed image.

In the image forming apparatus 1 according to an example embodiment, the image analysis function unit 23 converts image data to image drawing data page-by-page, and can store the image drawing data in the storage function unit 24, and the total number of pages of the image drawing data stored in the storage function unit 24 can be obtained. The information of total number of pages and image drawing data stored in the storage function unit 24 can be output to the printer engine 3, used as the image forming unit, to print out images on one ore more sheets used as recording medium.

Therefore, the printer engine 3 does not need to request the controller 2 whether a next page is still present for the to-be-printed image, and resultantly, the printer engine 3 can recognize the total number of pages of to-be-printed print data before conducting a printing operation, by which the printer engine 3 can be operated effectively and preferably.

Further, in the image forming apparatus 1 according to an example embodiment, the printer engine 3 manages the number of print pages (or the number of pages to be used for image forming process) based on information of the total number of pages, and upon completing a printout of the last page of image drawing data (completion of image forming process), the printer engine 3 can shift each unit used for the printing operation or image forming operation such as a fixing unit, a polygon motor, or the like to the reduced-power condition to reduce or stop power supply to such units.

Therefore, without requesting the controller 2 to check whether a next page is still present for the to-be-printed image from the printer engine 3, which is conducted in conventional arts, the power mode can be promptly shifted to and set at the reduced-power condition, by which the power consumption can be further reduced for the above described example embodiment.

In the above described example embodiment, the total number of pages of to-be-printed image data can be reported to the image forming unit. When the image forming process of the last page of to-be-printed image data is completed, the image forming unit can be promptly shifted to the reduced-power condition to reduce the power consumption.

The above-described example embodiment can be applied to an image forming apparatus that includes a printer engine adaptable for the reduced-power condition, such as printers, copiers, facsimile machines, multi-functional apparatuses, an image forming control method, a software program of image forming control method, and a storage.

## Claims

1. An image forming apparatus (1), comprising:
a controller (2) comprising:
an image processing unit (23) to prepare page-by-page image drawing data by converting image data input to the image forming apparatus (1);
a data storage unit (24) to store the image drawing data prepared by the image processing unit (23); and
a page-number obtaining unit to obtain the total number of pages of the image drawing data stored in the data storage unit (24); and
an image forming unit (3) configured to output an image on a recording medium based on the image drawing data,
wherein the image forming unit (3) comprises one or more devices (33, 34) used for an image forming process;
**characterized in that**:
the controller (2) further comprising:
a data management unit to output the total number of pages and the image drawing data stored in the data storage unit (24) to the image forming unit (3); and
an interface (26) configured to transmit the image drawing data and the total number of print pages of the image drawing data to the image forming unit (3);
the image forming unit (3) further comprising:
a power saving unit (32) configured to shift the image forming apparatus (1) to a reduced-power mode that reduces power supply to the one or more devices (33, 34) used for an image forming process upon completing output of an image of the last page of the image drawing data,
wherein the image forming unit (3) manages the number of image forming pages based on the total number of pages received from the data management unit.

2. A method of controlling image formation by an image forming apparatus (1) having a controller (2) and an image forming unit (3), comprising the steps of:
converting image data, input to the image forming apparatus (1), to image drawing data page by page;
storing the image drawing data to a data storage unit (24);
obtaining the total number of pages of the image drawing data stored in the data storage unit (24);
outputting an image on a recording medium based the image drawing data using the image forming unit (3);
**characterized by**:
transmitting the total number of pages and the image drawing data stored in the data storage unit (24) to the image forming unit (3) for output;
managing the number of image forming pages at the image outputting step based on the total number of pages; and
shifting the image forming apparatus (1) to a reduced-power mode upon completing output of an image of the last page of the image drawing data at the outputting step to reduce power supply to one or more devices (33, 34) used in the outputting step, wherein the image forming unit (3) comprises the one or more devices (33, 34).

3. A non-transitory computer readable carrier medium storing a program for executing a method of controlling image formation by an image forming apparatus (1) having a controller (2) and an image forming unit (3), which when executed causes a computer to perform the method of controlling image formation, the method comprising the steps of:
converting image data, input to the image forming apparatus (1), to image drawing data page-by-page;
storing the image drawing data to a data storage unit (24);
obtaining the total number of pages of the image drawing data stored in the data storage unit (24);
outputting an image on a recording medium based the image drawing data using the image forming unit (3);
**characterized by**:
transmitting the total number of pages and the image drawing data stored in the data storage unit (24) to the image forming unit (3) for output;
managing the number of image forming pages at the image outputting step based on the total number of pages; and
shifting the image forming apparatus (1) to a reduced-power mode upon completing output of an image of the last page of the image drawing data at the outputting step to reduce power supply to one or more devices (33, 34) used in the outputting step, wherein the image forming unit (3) comprises the one or more devices (33, 34).

## Patentansprüche

1. Bilderzeugungsvorrichtung (1), die umfasst:
eine Steuereinheit (2), die umfasst:
eine Bildverarbeitungseinheit (23), um Seite-für-Seite-Bildzeichnungsdaten durch Umsetzen der in die Bilderzeugungsvorrichtung (1) eingegebenen Bilddaten zu erstellen;
eine Datenspeichereinheit (24), um die durch die Bildverarbeitungseinheit (23) erstellten Bildzeichnungsdaten zu speichern; und
eine Seitenanzahlerfassungseinheit, um die Gesamtanzahl von Seiten der in der Datenspeichereinheit (24) gespeicherten Bildzeichnungsdaten zu erhalten; und
eine Bilderzeugungseinheit (3), die konfiguriert ist, ein Bild auf einem Aufzeichnungsmedium anhand der Bildzeichnungsdaten auszugeben,
wobei die Bilderzeugungseinheit (3) eine oder mehrere Vorrichtungen (33, 34), die für einen Bilderzeugungsvorgang verwendet werden, umfasst;
**dadurch gekennzeichnet, dass**:
die Steuereinheit (2) ferner umfasst:
eine Datenmanagementeinheit, um die Gesamtanzahl von Seiten und die in der Datenspeichereinheit (24) gespeicherten Bildzeichnungsdaten an die Bilderzeugungseinheit (3) auszugeben; und
eine Schnittstelle (26), die konfiguriert ist, die Bildzeichnungsdaten und die Gesamtanzahl von Druckseiten der Bildzeichnungsdaten an die Bilderzeugungseinheit (3) zu senden;
wobei die Bilderzeugungseinheit (3) ferner umfasst:
eine Energiespareinheit (32), die konfiguriert ist, die Bilderzeugungsvorrichtung (1) in eine Betriebsart mit reduzierter Energie, die die Energieversorgung der einen oder der mehreren Vorrichtungen (33, 34), die für einen Bilderzeugungsvorgang verwendet werden, beim Abschließen einer Ausgabe eines Bildes der letzten Seite der Bildzeichnungsdaten reduziert, zu versetzen,
wobei die Bilderzeugungseinheit (3) die Anzahl der Bilderzeugungsseiten anhand der Gesamtanzahl von Seiten, die von der Datenmanagementeinheit empfangen wurde, managt.

2. Verfahren zum Steuern einer Bilderzeugung durch eine Bilderzeugungsvorrichtung (1) mit einer Steuereinheit (2) und einer Bilderzeugungseinheit (3), das die Schritte umfasst:
Umsetzen von Bilddaten, die in die Bilderzeugungsvorrichtung (1) eingegeben werden, Seite für Seite in Bildzeichnungsdaten;
Speichern der Bildzeichnungsdaten in einer Datenspeichereinheit (24);
Erhalten der Gesamtanzahl von Seiten der in der Datenspeichereinheit gespeicherten Bildzeichnungsdaten;
Ausgeben eines Bildes auf einem Aufzeichnungsmedium anhand der Bildzeichnungsdaten unter Verwendung der Bilderzeugungseinheit (3);
**gekennzeichnet durch**:
Senden der Gesamtanzahl von Seiten und der in der Datenspeichereinheit (24) gespeicherten Bildzeichnungsdaten an die Bilderzeugungseinheit (3) für eine Ausgabe;
Managen der Anzahl der Bilderzeugungsseiten in dem Bildausgabeschritt anhand der Gesamtanzahl von Seiten; und
Versetzen der Bilderzeugungsvorrichtung (1) in eine Betriebsart mit reduzierter Energie beim Abschließen einer Ausgabe eines Bildes der letzten Seite der Bildzeichnungsdaten in dem Ausgabeschritt, um die Energieversorgung der einen oder der mehreren Vorrichtungen (33, 34), die in dem Ausgabeschritt verwendet werden, zu reduzieren, wobei die Bilderzeugungseinheit (3) die eine oder die mehreren Vorrichtungen (33, 34) umfasst.

3. Nichttransitorisches computerlesbares Trägermedium, das ein Programm zum Ausführen eines Verfahrens zum Steuern einer Bilderzeugung durch eine Bilderzeugungsvorrichtung (1) mit einer Steuereinheit (2) und einer Bilderzeugungseinheit (3) speichert, das dann, wenn es ausgeführt wird, bewirkt, dass ein Computer das Verfahren des Steuerns der Bilderzeugung ausführt, wobei das Verfahren die Schritte umfasst:
Umsetzen der Bilddaten, die in die Bilderzeugungsvorrichtung (1) eingegeben werden, Seite für Seite in Bildzeichnungsdaten;
Speichern der Bildzeichnungsdaten in einer Datenspeichereinheit (24);
Erhalten der Gesamtanzahl von Seiten der in der Datenspeichereinheit (24) gespeicherten Bildzeichnungsdaten;
Ausgeben eines Bildes auf einem Aufzeichnungsmedium anhand der Bildzeichnungsdaten unter Verwendung der Bilderzeugungseinheit (3);
**gekennzeichnet durch**:
Senden der Gesamtanzahl von Seiten und der in der Datenspeichereinheit (24) gespeicherten Bildzeichnungsdaten an die Bilderzeugungseinheit (3) für eine Ausgabe;
Managen der Gesamtanzahl der Bilderzeugungsseiten in dem Bildausgabeschritt anhand der Gesamtanzahl von Seiten; und
Versetzen der Bilderzeugungsvorrichtung (1) in eine Betriebsart mit reduzierter Energie beim Abschließen einer Ausgabe eines Bildes der letzten Seite der Bildzeichnungsdaten in dem Ausgabeschritt, um die Energieversorgung der einen oder der mehreren Vorrichtungen (33, 34), die in dem Ausgabeschritt verwendet werden, zu reduzieren, wobei die Bilderzeugungseinheit (3) die eine oder die mehreren Vorrichtungen (33, 34) umfasst.

## Revendications

1. Appareil de formation d'image (1), comportant :
une commande (2) comportant :
une unité de traitement d'image (23) pour préparer des données de dessin d'image page par page en convertissant des données d'image introduites dans l'appareil de formation d'image (1) ;
une unité de stockage de données (24) pour stocker les données de dessin d'image préparées par l'unité de traitement d'image (23) ; et
une unité d'obtention de nombre de pages pour obtenir le nombre total de pages des données de dessin d'image stockées dans l'unité de stockage de données (24) ; et
une unité de formation d'image (3) configurée pour émettre en sortie une image sur un support d'enregistrement en se fondant sur des données de dessin d'image,
l'unité de formation d'image (3) comportant un ou plusieurs dispositifs (33, 34) utilisés pour un processus de formation d'image ;
**caractérisé en ce que** :
la commande (2) comporte en outre :
une unité de gestion de données pour émettre en sortie le nombre total de pages et les données de dessin d'image stockées dans l'unité de stockage de données (24) à destination de l'unité de formation d'image (3) ; et
une interface (26) configurée pour transmettre les données de dessin d'image et le nombre total de pages imprimées des données de dessin d'image à l'unité de formation d'image (3) ;
l'unité de formation d'image (3) comportant en outre :
une unité d'économie d'énergie (32) configurée pour placer l'appareil de formation d'image (1) dans un mode de consommation réduite pour réduire l'alimentation en puissance des un ou plusieurs dispositifs (33, 34) utilisés pour un processus de formation d'image dès l'achèvement de l'émission en sortie d'une image de la dernière page des données de dessin d'image,
l'unité de formation d'image (3) gérant le nombre de pages formant une image en se fondant sur le nombre total de pages reçues en provenance de l'unité de gestion de données.

2. Procédé pour commander la formation d'images par un appareil de formation d'image (1) comportant une commande (2) et une unité de formation d'image (3), comportant les étapes consistant à :
convertir les données d'image introduites dans l'appareil de formation d'image (1) en données de dessin d'image page par page ;
stocker les données de dessin d'image dans une unité de stockage de données (24) ;
obtenir le nombre total de pages des données de dessin d'image stockées dans l'unité de stockage de données (24) ;
émettre en sortie une image sur un support d'enregistrement en se fondant sur les données de dessin d'image en utilisant l'unité de formation d'image (3) ;
**caractérisé par** :
la transmission du nombre total de pages et des données de dessin d'image stockées dans l'unité de stockage de données (24) à l'unité de formation d'image (3) pour leur émission en sortie ;
la gestion du nombre de pages formant une image lors de l'étape d'émission en sortie d'image en se fondant sur le nombre total de pages ; et
le placement de l'appareil de formation d'images (1) dans un mode de consommation réduite dès l'achèvement de l'émission en sortie d'une image de la dernière page des données de dessin d'image lors de l'étape d'émission en sortie pour réduire une alimentation en énergie d'un ou plusieurs dispositifs (33, 34) utilisés lors de l'étape d'émission en sortie, l'unité de formation d'image (3) comportant les un ou plusieurs dispositifs (33, 34).

3. Support de stockage non transitoire lisible par ordinateur stockant un programme pour exécuter un procédé de commande de formation d'image par un appareil de formation d'image (1) présentant une commande (2) et une unité de formation d'image (3), qui lorsqu'il est exécuté amène un ordinateur à mettre en oeuvre le procédé de commande de formation d'image, le procédé comportant les étapes consistant à :
convertir des données d'image introduites dans l'appareil de formation d'image (1) en données de dessin d'image page par page ;
stocker les données de dessin d'image dans une unité de stockage de données (24) ;
obtenir le nombre total de pages des données de dessin d'image stockées dans l'unité de stockage de données (24) ;
émettre en sortie une image sur un support d'enregistrement en se fondant sur les données de dessin d'image en utilisant l'unité de formation d'image (3) ;
**caractérisé par** :
la transmission du nombre total de pages et des données de dessin d'image stockées dans l'unité de stockage de données (24) à l'unité de formation d'image (3) pour leur émission en sortie ;
la gestion du nombre de pages formant une image lors de l'étape d'émission en sortie d'image en se fondant sur le nombre total de pages ; et
le placement de l'appareil de formation d'images (1) dans un mode de consommation réduite dès l'achèvement de l'émission en sortie d'une image de la dernière page des données de dessin d'image lors de l'étape d'émission en sortie pour réduire une alimentation en énergie d'un ou plusieurs dispositifs (33, 34) utilisés lors de l'étape d'émission en sortie, l'unité de formation d'image (3) comportant les un ou plusieurs dispositifs (33, 34).
